Europäisches Patentamt

(19) European Patent Office

Office européen des brevets

(11) Veröffentlichungsnummer: **0 102 001**
**B1**

(12) **EUROPÄISCHE PATENTSCHRIFT**

(45) Veröffentlichungstag der Patentschrift:
13.05.87

(51) Int. Cl.⁴: **C 03 B 9/193**

(21) Anmeldenummer: **83107888.6**

(22) Anmeldetag: **10.08.83**

(54) Verfahren und Vorrichtung zum Pressen eines Glaskülbels.

(30) Priorität: **31.08.82 DE 3232288**

(43) Veröffentlichungstag der Anmeldung:
**07.03.84 Patentblatt 84/10**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**DE - A - 1 704 342**
**DE - A - 2 537 037**
**US - A - 3 607 206**
**US - A - 4 276 073**
**US - A - 4 336 050**

(73) Patentinhaber: **Fa. HERMANN HEYE, Allee,**
**D-3063 Obernkirchen (DE)**

(72) Erfinder: **Monden, Norbert, Nelkenweg 6,**
**D-3262 Auetal 2 (DE)**

(74) Vertreter: **Kosel, Peter, Dipl.-Ing. et al, Patentanwälte**
**Dipl.-Inge. Röse, Kosel & Sobisch Odastrasse 4a**
**Postfach 129, D-3353 Bad Gandersheim 1 (DE)**

**Beschreibung**

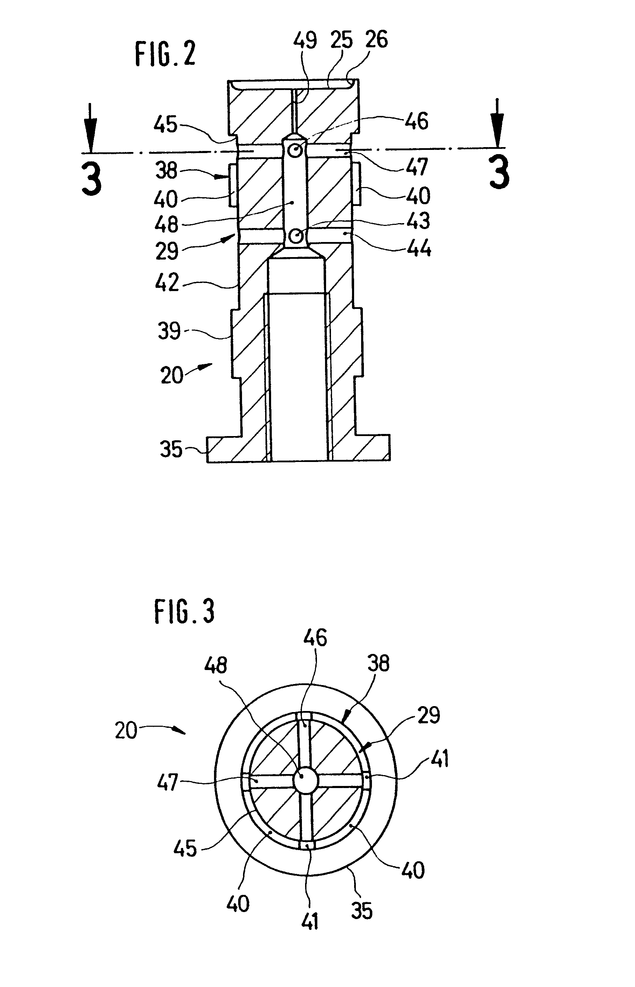

Die Erfindung betrifft ein Verfahren gemäss dem Oberbegriff des Anspruchs 1 und eine Vorrichtung gemäss dem Oberbegriff des Anspruchs 5. Bei einem bekannten Verfahren und einer bekannten Vorrichtung dieser Art (DE-Patentschrift 2 537 037, Fig. 3) ist die Blockformausnehmung von konstantem Volumen. Ungünstig ist dabei, dass das Volumen des Glaspostens nicht grösser als jenes konstante Volumen der Blockformausnehmung sein darf. Anderenfalls wäre die Blockform überfüllt. Teile der die Blockform überragenden Glasmasse werden dann zwischen den Teilen des an die Blockform angrenzenden Vorformelements (Mündungsform oder geteiltes Vorformmittelstück) eingequetscht. So werden seitlich gegenüberliegend an dem Kübel unerwünschte «Flügel» gebildet, die bei dem fertigen Hohlglasgegenstand meist zu Ausschuss führen. Kritisch ist insbesondere der Übergang vom Mündungsdurchmesser auf den obersten oder Fülldurchmesser der Blockformausnehmung.

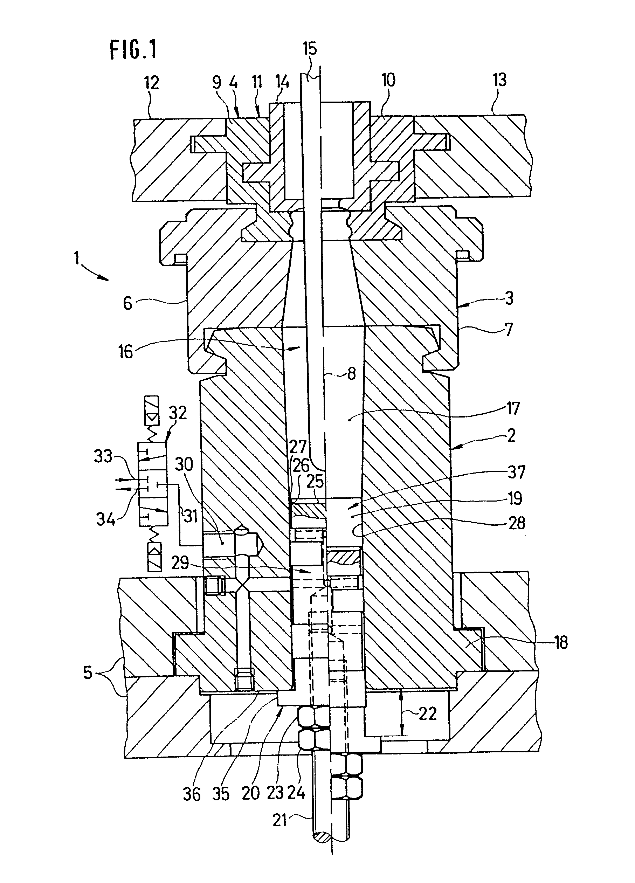

Aus der US-Patentschrift 4 336 050 ist es an sich bekannt, die Vorformen jeweils aus der unten angeordneten Mündungsform 14, 15, dem darüber liegenden geteilten Vorformmittelstück 13 und der darauf aufgesetzten, nicht längsgeteilten Blockform 12 mit dem schon teilweise von unten in die Vorformausnehmung eingefahrenen Pressstempel 20 zu schliessen, bevor der Glasposten G gemäss Fig. 1 dieser Druckschrift durch eine sich nach oben und aussen hin trichterförmig erweiternde Durchbrechung in dem Boden der Blockform 12 in die Vorformausnehmung eingebracht wird. Sodann wird gemäss Fig. 2 dieser Druckschrift eine Vorformbodenvorrichtung 21 mit je Vorform einem die Bodenfläche der Vorformausnehmung definierenden, in die trichterförmige Bodendurchbrechung der Blockform 12 eintauchenden Presskolben 26 auf die Blockform 12 aufgesetzt. Der Presskolben 26 ist als Kolbenstange an einem Kolben 23 befestigt, der in einem Zylinder 22 verschiebbar und normalerweise durch Drucklufteinleitung bei 24 in seine obere Anschlagstellung am Zylinder 22 gemäss Fig. 2 geschoben ist. Erst nachdem der Pressstempel 20 voll nach oben bis in seine obere Anschlagstellung gemäss Fig. 3 gefahren ist, wird durch Drucklufteinleitung bei 25 in den Zylinder 22 der Presskolben 26 mit vorherbestimmter Kraft auf das Kübel gepresst. Nachteilig sind hierbei der verhältnismässig komplizierte Aufbau und die Bewegung der gesamten Vorformbodenvorrichtung 21 relativ zu den Blockformen 12 und die im Fertigungszyklus schon verhältnismässig frühzeitige Berührung des oberen Teils des Vorformmittelstücks 13 und der Spitze des Pressstempels 20 durch den heissen Glasposten G mit entsprechender, unerwünscht starker Erwärmung dieser Vorformteile (Fig. 2).

Der Erfindung liegt die Aufgabe zugrunde, bei einer Vorform mit nach oben offener, nicht längsgeteilter Blockform sowie darüber angeordnetem, längsgeteiltem Vorformmittelstück und Mündungsform mit längsgeteiltem Mündungswerkzeug grössere Freiheit in der relativen Gestaltung von Blockform, Vorformmittelstück, Mündungsform, Pressstempel und Pressstempelweg und damit in der Formgestaltung des Kübels zu erhalten, um im fertigen Hohlglasgegenstand optimale Wanddickenverhältnisse zu erreichen.

Diese Aufgabe ist durch die kennzeichnenden Merkmale des Anspruchs 1 gelöst. Bei verhältnismässig geringer axialer Länge der Blockformausnehmung lässt sich dank des Zusatzvolumens ein Glasposten von verhältnismässig sehr viel grösserem Volumen in der Blockform aufnehmen, ohne dass es zu einer Überfüllung der Blockform mit Glas kommt. Nach dem Zusammenschliessen der gesamten Vorform wird das Zusatzvolumen zunehmend verringert und schliesslich zu Null gemacht, wobei Glasmasse über die oberste Begrenzungsebene der Blockform hinaus in den Rest der Vorformausnehmung gefördert wird. Das Zusatzvolumen in der Blockform bietet erhebliche Vorteile bei der Formgestaltung der Vorformausnehmung im Bereich des Vorformmittelstücks. So können insbesondere zu schnelle Zunahmen der Glasquerschnitte von der Mündung bis zum Fülldurchmesser der Blockform vermieden werden. Dort haben sich bisher oft unerwünschte Glashäufungen befunden, die in mehrerer Hinsicht technologisch ungünstig sind. Vor allem ist hier erhebliche Wärmeenergie gespeichert, die beim späteren Weiterverarbeiten des Külbels zu vorzeitiger Rückerhitzung und unerwünschtem Fliessen der Külbelwand in diesem Bereich führen kann. Durch das Zusatzvolumen ist für die Wanddickenänderung des Külbels in axialer Richtung die nötige Freiheit gewonnen. Es können optimale Übergänge vom Mündungsquerschnitt zum Füllquerschnitt der Blockform geschaffen werden. Dazu kann jetzt insbesondere eine grössere axiale Länge des Vorformmittelstücks eingesetzt werden, die sich bisher nicht erreichen liess.

Gemäss Anspruch 2 ist verhältnismässig geringe Energie für die Verringerung des Zusatzvolumens auf Null erforderlich.

Mit den Merkmalen des Anspruchs 3 lässt sich die Zykluszeit verringern.

Die Merkmale des Anspruchs 4 dienen dem Zweck, eine direkte Berührung des Glases mit dem Boden der Blockform während einer bestimmten Zeit zu verhindern, um die Temperatur jenes Bodens niedrig zu halten. Damit erhält man grössere Freiheit in der Formgestaltung des Blockformbodens. Nach der Entfernung des Druckgases übernimmt der Blockformboden die Formung des Külbelbodens.

Die vorerwähnte Aufgabe ist auch durch die kennzeichnenden Merkmale des Anspruchs 5 gelöst. Der Kolben kann z.B. über eine Stange durch einen Nocken oder durch eine Kolben-Zylinder-Einheit angetrieben werden. Es bereitet keine Schwierigkeit, den Kolben innerhalb des Arbeitszyklus mit beliebiger Genauigkeit zu heben und zu senken. Die Formung des Külbelbodens findet durch den Kolben statt.

Gemäss Anspruch 6 kann die Vorformausnehmung während des Betriebszyklus wahlweise zur Formenkühlung oder zur Schaffung eines Gaspolsters zwischen dem Kolben und dem Glas mit Druckgas beaufschlagt oder an Vakuum gelegt werden. Der Ringspalt ist von so geringer Breite, dass in ihn Glas in nennenswertem oder gar schädlichem Umfang nicht eindringen kann.

Gemäss Anspruch 7 kann die Belüftung und Entlüftung der Vorformausnehmung beschleunigt und verbessert werden. Als Druckgas kommt vorzugsweise Druckluft in Betracht.

Die Merkmale des Anspruchs 8 dienen der sicheren radialen Führung des Kolbens in der Bodenausnehmung und sorgen für eine gasdichte Abdichtung des Kolbens im Bereich der unteren Führungseinrichtung.

Die Erfindung wird nachfolgend anhand des in den Zeichnungen dargestellten Ausführungsbeispiels näher erläutert. Es zeigen:

Fig. 1 einen Längsschnitt durch eine Vorform mit geteiltem Vorformmittelstück und beiden Endstellungen des Kolbens,

Fig. 2 einen Längsschnitt durch den Kolben gemäss Fig. 1 in vergrösserter Darstellung,

Fig. 3 die Schnittansicht nach Linie 3–3 in Fig. 2 und

Fig. 4 eine schematische Darstellung der Külbelgestaltung für eine Flasche nach dem Stand der Technik und der Erfindung.

In Fig. 1 ist eine Vorform 1 aus einer nicht längsgeteilten Blockform 2, einem geteilten Vorformmittelstück 3 und einer Mündungsform 4 aufgebaut. Die Blockform 2 wird von einer Tragkonstruktion 5 getragen und gehalten. Vorformmittelstückhälften 6 und 7 des Vorformmittelstücks 3 sind in an sich bekannter Weise jeweils in einer nicht gezeichneten Zangenhälfte aufgenommen, die ein Öffnen und Schliessen des Vorformmittelstücks 3 in einer zu einer Längsachse 8 der Vorform 1 rechtwinkligen Ebene gestattet.

Die Mündungsform 4 weist Mündungswerkzeughälften 9 und 10 eines geteilten Mündungswerkzeugs 11 auf, die jeweils von einer Halterhälfte 12 und 13 relativ zueinander in einer zu der Längsachse 8 rechtwinkligen Ebene bewegbar gehalten sind. Die Mündungsform 4 weist ausserdem einen ungeteilten Führungsring 14 auf, der durch die Mündungswerkzeughälften 9, 10 gehalten ist. Der Führungsring 14 führt einen Pressstempel 15 bei seiner Bewegung in die und aus der Vorform 1.

Die Vorform 1 weist eine Vorformausnehmung 16 auf, die zum Teil durch eine Blockformausnehmung 17 gebildet wird.

Ein Boden 18 der Blockform 2 weist eine mit der Längsachse 8 koaxiale Bodenausnehmung 19 auf, in der ein Kolben 20 mit einer Stange 21 um einen Hub 22 heb- und senkbar ist. Mit Kontermuttern 23 und 24 auf der Stange 21 lässt sich die Höhenlage des Kolbens 20 relativ zu der Stange 21 einstellen. Der Hubantrieb der Stange 21 kann in an sich bekannter beliebiger Weise in Abhängigkeit vom Betriebszyklus gesteuert erfolgen.

Der Kolben 20 weist oben eine mittige Vertiefung 25 auf, die aussen am Umfang mit einer Rundung 26 nach oben hin ausläuft. Der Kolben 20 bildet oben einen Ringspalt 27 mit einer gegenüberliegenden Wand 28 der Bodenausnehmung 19. Der Ringspalt 27 ist über ein Kanalsystem 29 des Kolben 20 ständig mit einem in der Wand 28 der Bodenausnehmung 19 mündenden Kanal 30 der Blockform 2 verbunden. Der Kanal 30 ist über eine Leitung 31 mit einem 3Wege/3-Stellungsventil 32 verbunden, das einerseits an eine Druckluftleitung 33 und andererseits an eine Vakuumleitung 34 angeschlossen ist. Je nach der Schaltstellung des Wegeventils 32 kann daher die Leitung 31 und damit die Formausnehmung 16 blockiert, mit Druckluft beaufschlagt oder an Vakuum gelegt werden.

In Fig. 1 ist der Kolben 20 auf der linken Seite der Längsachse 8 in seiner obersten Endstellung gezeigt, in der ein unterer Flansch 35 an einer Bodenfläche 36 der Blockform 2 anliegt. Auf der rechten Seite der Längsachse 8 ist in Fig. 1 der Kolben in seiner Tiefststellung eingezeichnet.

In der Tiefststellung des Kolbens 20 wird das Kanalsystem 29 mit Druckluft beaufschlagt, die insbesondere den thermisch hoch belasteten oberen Rand des Kolbens 20 kühlen soll. Die Kühlluft streicht dabei durch den Ringspalt 27 und kühlt ausserdem die Vorform 1. Das Kanalsystem 29 kann auch während der Bewegung des Kolbens 20 nach oben mit Druckluft beaufschlagt bleiben. Es bildet sich dann ein Druckluftpolster zwischen dem Kolben 20 und dem von oben her in die Blockformausnehmung 17 eingebrachten Glasposten aus. Dadurch wird die direkte Berührung zwischen dem Kolben 20 und dem Glastropfen zunächst weitgehend verhindert und die thermische Belastung des Kolbens 20 verringert. Kurz vor Erreichen des oberen Totpunkts des Kolbens 20 wird das Wegeventil 32 in seine andere Endstellung durchgeschaltet und damit das Kanalsystem 29 an Vakuum gelegt. Die Luft aus der Vorformausnehmung 16 wird abgesaugt, so dass sich das Glas zwischenraumfrei an die Begrenzungswand der Vorformausnehmung 16 und auch in die Vertiefung 26 des Kolbens 20 legen kann.

Durch die Vertikalbewegung des Kolbens 20 ist ein Zusatzvolumen 37 definiert, um das das Volumen der Blockformausnehmung 17 vor dem Einbringen des Glaspostens vergrössert wird. Die so vergrösserte Blockformausnehmung 17 kann also ein grösseres Glasvolumen aufnehmen als beim Stand der Technik, dem ein veränderbares Volumen der Blockformausnehmung nicht zur Verfügung steht.

Fig. 2 zeigt weitere Einzelheiten des Kolbens 20. Der Kolben 20 ist mit zwei in axialem Abstand voneinander angeordneten Führungseinrichtungen 38 und 39 versehen, die die radiale Führung des Kolbens 20 gegenüber der Wand 28 (Fig. 1) übernehmen. Die obere Führungseinrichtung 38 besteht aus vier Ringsegmenten 40 (siehe auch Fig.3), wobei zwischen benachbarten Ringsegmenten 40 jeweils ein axialer Durchlass 41 als Bestandteil des Kanalsystems 29 vorgesehen ist. Die untere Führungseinrichtung 39 ist als nicht unterbrochener Ring ausgebildet, der mit der Wand 28 (Fig. 1) eine gasdichte Gleitpassung aufweist.

Zwischen den Führungseinrichtungen 38, 39 ist in dem Kolben 20 eine Umfangsnut 42 des Kanalsystems 29 ausgebildet, von der aus sich unter einem rechten Winkel zueinander stehende Querbohrungen 43 und 44 durch den Kolben 20 erstrecken.

Oberhalb der oberen Führungseinrichtung 38 befindet sich ebenfalls eine Ringnut 45 des Kanalsystems 29, von der ebenfalls gekreuzte Querbohrungen 46 und 47 ausgehen. Die Querbohrungen 43, 44 und 46, 47 sowie eine diese miteinander verbindende Axialbohrung 48 bilden ebenfalls einen Bestandteil des Kanalsystems 29.

Alternativ und gegenüber Fig. 1 zusätzlich ist in Fig. 2 in dem Kolben 20 eine Stichbohrung 49 des Kanalsystems 29 vorgesehen, die z.B. 0,7 mm Durchmesser aufweist und die Axialbohrung 48 mit der Vertiefung 26 verbindet. Die Stichbohrung 49 ist in diesem Fall zentral im Kolben 20 angeordnet. Es können auch noch weitere derartige Stichbohrungen bei Bedarf vorgesehen sein.

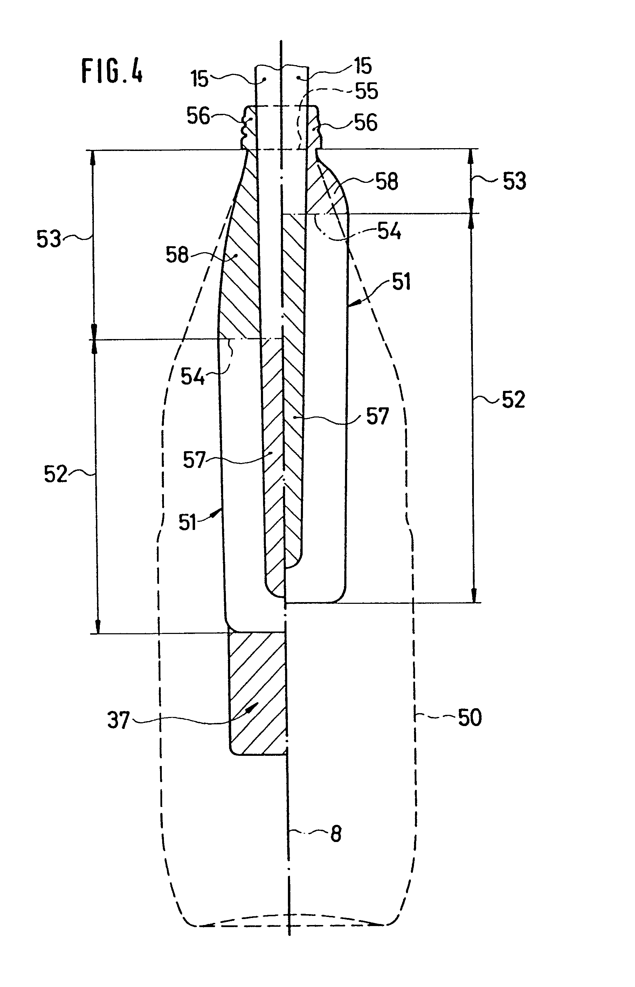

In Fig. 4 ist schematisch angedeutet, wie ein Hohlglasgegenstand 50, in diesem Fall eine Flasche, rechts von der Längsachse 8 nach dem Stand der Technik und links von der Längsachse 8 nach der Erfindung hergestellt werden kann. Gleiche Teile sind dabei mit gleichen Bezugszahlen versehen.

Beim Stand der Technik ist das Külbel 51 kürzer, die axiale Länge 52 der Blockformausnehmung 17 grösser und die axiale Länge 53 des Vorformmittelstücks 3 deutlich kleiner als bei der Erfindung. So liegt bei der Erfindung eine Teilfuge 54 zwischen der Blockform 2 und dem Vorformmittelstück 3 deutlich tiefer als beim Stand der Technik, während eine Teilfuge 55 zwischen dem Vorformmittelstück 3 und der Mündungsform 4 in gleicher Höhe liegt.

Eine Mündung 56 ist in beiden Fällen von gleichem Volumen.

Ein in Fig. 4 schraffiertes unteres Teilvolumen 57 des Pressstempels 15 muss wegen der beim Stand der Technik gegebenenen Konstanz des Volumens der Blockformausnehmung 17 gleich der Summe aus dem Volumen der Mündung 56 und einem Vorformmittelstückvolumen 58 des Külbels 51 sein.

Beim Stand der Technik ergibt sich wegen der verhältnismässig geringen axialen Länge 53 eine unerwünschte Glashäufung im Bereich des Vorformmittelstückvolumens 58 mit verhältnismässig schnellem Zuwachs der Querschnittsfläche des Külbels 51 von der Mündung 56 bis zu der Teilfuge 54. Die Glasmasse ist im Bereich des Vorformmittelstückvolumens 58 deutlich nach aussen hin über die spätere Kontur des fertigen Hohlglasgegenstands 50 hinaus ausgebaucht.

Dies ist ein technologisch höchst unerwünschter Zustand, der in dem fertigen Hohlglasgegenstand 50 zu einer unbefriedigenden Wanddickenverteilung im Bereich der Flaschenschulter führt. Da man beim Stand der Technik oft auch mit dem Pressstempel 15 nicht bis zu der eigentlich erforderlichen Presstiefe durchpressen kann, ergeben sich oft auch nachteilige Glashäufungen im Bereich des Külbelbodens und damit ungleichmässige zu grosse Wanddicke im Boden des fertigen Hohlglasgegenstands 50.

Viel günstiger sind hier die Verhältnisse gemäss der Erfindung auf der linken Hälfte der Fig. 4. Hier gilt die Beziehung, dass die Summe aus dem Volumen der Mündung 56 und dem Vorformmittelstückvolumen 58 gleich der Summe aus dem unteren Teilvolumen 57 des Pressstempels 15 und dem Zusatzvolumen 37 ist. Dank des Zusatzvolumens 37 dringt bei der Erfindung der Pressstempel 15 mit einem nur verhältnismässig geringen Teilvolumen 57 in die Blockform 2 ein. Dennoch kann das Vorformmittelstückvolumen 58 in günstiger Weise verhältnismässig gross gemacht werden, bei entsprechend günstig grosser axialer Länge 53 des Vorformmittelstücks 3. So ergibt sich im Bereich des Vorformmittelstücks 3 eine für die Weiterverarbeitung des Külbels 51 optimale langsame Querschnittszunahme des Külbels 51 von der Mündung 56 bis zur Teilfuge 54. Ferner kann der Pressstempel 15 bei der Erfindung genau bis zu der technologisch optimalen Tiefe in die Blockform 2 eindringen.

Aus allem ergibt sich gemäss der Erfindung eine bisher bei den meisten Hohlglasgegenständen 50 nicht erreichbare gleichmässige Wanddickenverteilung. Dies hat zur Folge, dass die Wanddicke insgesamt geringer bemessen und damit das Gesamtgewicht des Hohlglasgegenstands 50 bei gleicher Festigkeit und Sicherheit herabgesetzt werden kann.

**Patentansprüche**

1. Verfahren zur Herstellung eines Külbels (51) durch Pressen in einer Vorform (1) einer Glasformmaschine, mit folgenden Schritten:

a) Aus einem Speiser wird ein Posten schmelzflüssigen Glases von oben in eine nach unten hin von einer Mündung (56) des Külbels (51) weg in der Querschnittfläche abnehmende Blockformausnehmung (17) einer nicht längsgeteilten Blockform (2) eingebracht,

b) eine ein geteiltes Mündungswerkzeug (11) aufweisende Mündungsform (4) und ein geteiltes Vorformmittelstück (3) zwischen der den Posten enthaltenden Blockform (2) und der Mündungsform (4) werden zur Bildung einer die Blockformausnehmung (17) als einen Teil aufweisenden Vorformausnehmung (16) der Vorform (1) geschlossen.

c) ein Pressstempel (15) wird in die Vorformausnehmung (16) eingeführt und verdrängt Glas bis zur Fertigstellung des Külbels (51), und

d) das Külbel (51) wird aus der Vorform (1) entnommen,

dadurch gekennzeichnet, dass das Volumen der Blockformausnehmung (17) vor dem Schritt a) um ein Zusatzvolumen (37) vergrössert wird, das es gestattet, im Schritt a) einen Glasposten von einem Volumen, das grösser als das der Blockformausnehmung (17) ist, in die Blockform (2) einzubringen, ohne dass es zu einer Überfüllung der Blockform (2) kommt, und dass das Volumen der Blockformausnehmung (17) bis zu der im Schritt c) erfolgenden Fertigstellung des Külbels (51) wieder auf seinen ursprünglichen Wert gebracht wird, wobei Glasmasse über die oberste Begrenzungsebene der Blockform hinaus in den Rest der Vorformausnehmung (16) gefördert wird.

2. Verfahren nach Anspruch 1, dadurch gekennzeichnet, dass das Volumen der Blockformausnehmung (17) wieder auf seinen ursprünglichen Wert gebracht wird, bevor der Pressstempel (15) im Schritt c) in Berührung mit dem Glas tritt.

3. Verfahren nach Anspruch 1, dadurch gekennzeichnet, dass der Pressstempel (15) im Schritt c) schon in Berührung mit dem Glas tritt, während das Volumen der Blockformausnehmung (17) wieder auf seinen ursprünglichen Wert gebracht wird.

4. Verfahren nach einem der Ansprüche 1 bis 3, dadurch gekennzeichnet, dass in die Blockformausnehmung (17) zwischen einem Boden (18) der Blockform (2) und das Glas ein Druckgas eingeleitet wird, und dass das Druckgas aus der Blockformausnehmung (17) entfernt wird, bevor das Volumen der Blockformausnehmung (17) wieder auf seinen ursprünglichen Wert gebracht worden ist.

5. Vorrichtung zur Durchführung des Verfahrens nach einem der Ansprüche 1 bis 4, mit einer dem Pressen eines Külbels (51) mit einem Pressstempel (15) dienenden Vorform (1) einer Glasformmaschine, wobei die Vorform (1) eine nicht längsgeteilte Blockform (2) mit einem Boden (18) und einer Blockformausnehmung (17) sowie oberhalb der Blockform (2) ein längsgeteiltes Vorformmittelstück (3) und eine mit einem längsgeteilten Mündungswerkzeug (11) versehene Mündungsform (4) aufweist, und wobei die Blockformausnehmung (17) nach unten hin in der Querschnittsfläche abnimmt und Teil einer Vorformausnehmung (16) ist, dadurch gekennzeichnet, dass in einer zylindrischen Bodenausnehmung (19) des Bodens (18) der Blockform (2) ein relativ zu der Blockform (2) mit einem einem Zusatzvolumen (37) der Blockformausnehmung (17) entsprechenden Hub (22) heb- und senkbarer Kolben (20) angeordnet ist, und dass der Kolben (20) in seiner angehobenen Endstellung zumindest annähernd eine Bodenfläche der Blockformausnehmung (17) definiert.

6. Vorrichtung nach Anspruch 5, dadurch gekennzeichnet, dass der Kolben (20) oben einen Ringspalt (27) mit einer gegenüberliegenden Wand (28) der Bodenausnehmung (19) der Blockform (2) bildet, und dass der Ringspalt (27) über ein Kanalsystem (29) des Kolbens (20) ständig mit einem in der Wand (28) der Bodenausnehmung (19) mündenden Kanal (30) der Blockform (2) verbunden ist.

7. Vorrichtung nach Anspruch 6, dadurch gekennzeichnet, dass das Kanalsystem (29) wenigstens eine in einer oberen Begrenzungsfläche (vgl. 25) des Kolbens (20) mündende Stichbohrung (49) aufweist (Fig. 2).

8. Vorrichtung nach Anspruch 6 oder 7, dadurch gekennzeichnet, dass der Kolben (20) mit zwei in axialem Abstand voneinander angeordneten Führungseinrichtungen (38, 39) an der Wand (28) der Bodenausnehmung (19) abgestützt ist und dass zumindest die untere Führungseinrichtung (39) gegenüber der Wand (28) in Umfangsrichtung abgedichtet ist.

**Claims**

1. Process for the manufacture of a parison (51) by pressing in a blank mould (1) of a glass forming machine, comprising the following steps:

a) a gob of molten glass is introduced from a feeder, from above, into a block mould cavity (17) of a block mould (2) which is not longitudinally split, said cavity decreasing in cross-sectional area downwardly from a neck (56) of the parison (51),

b) a neck mould (4) having a split neck ring (11) and a split blank mould middle-piece (3) located between the block mould (2), containing the gob, and the neck mould (4), are closed to form a blank mould cavity (16) of the blank mould (1), said blank mould cavity including the block mould cavity (17) as one part,

c) a pressing plunger (15) is introduced into the blank mould cavity (16) and displaces glass until the finished formation of the parison (51), and

d) the parison (51) is removed from the blank mould (1),

characterised in that the volume of the block mould cavity (17) is increased before step a) by an added volume (37) which permits a glass gob of a volume which is greater than that of the block mould cavity (17) to be introduced into the block mould (2) in step a) without it causing overflowing of the block mould (2), and in that the volume of the block mould cavity (17) is brought back to its original value prior to the finished formation of the parison (51) resulting from step c), so that glass material is forced up above the uppermost boundary level of the block mould out into the remainder of the blank mould cavity (16).

2. Process according to claim 1, characterised in that the volume of the block mould cavity (17) is brought back to its original value before the pressing plunger (15) comes into contact with the glass in step c).

3. Process according to claim 1, characterised in that the pressing plunger (15) already comes into contact with the glass in step c) while the volume of the block mould cavity (17) is being brought back to its original value.

4. Process according to one of claims 1 to 3, characterised in that a compressed gas is introduced into the block mould cavity (17) between a base (18) of the block mould (2) and the glass, and in that the compressed gas is removed from the block mould cavity (17) before the volume of the block mould cavity (17) has been brought back again to its original value.

5. Apparatus for carrying out the process according to one of claims 1 to 4, comprising a blank mould (1) of a glass forming machine which serves for the pressing of a parison (51) with a pressing plunger (15), in which the blank mould (1) comprises a block mould (2) which is not longitudinally split and which has a base (18) and a block mould cavity (17), as well as above the block mould (2) a longitudinally split blank mould middle-piece (3) and a neck mould (4) provided with a longitudinally split neck ring (11), and in which the block mould cavity (17) diminishes in cross-sectional area in a downward direction and is part of a blank mould cavity (16), characterised in that a piston (20) which can be raised and lowered relative to the block mould (2) by a stroke height (22) corresponding to an added volume (37) of the block mould cavity (17) is arranged in a cylindrical bottom cavity (19) of the base (18) of the block mould (2), and in that the piston (20), in its raised end position, defines at least approximately a bottom surface of the block mould cavity (17).

6. Apparatus according to claim 5, characterised in that at the upper end of the piston (20) there is an annular gap (27) between the piston and an opposing wall (28) of the bottom cavity (19) of the block mould (2), and in that the annular gap (27) is permanently connected by way of a channel system (29) of the piston (20) with a channel (30) in the block mould (2) which issues through the wall (28) of the bottom cavity (19).

7. Apparatus according to claim 6, characterised in that the channel system (29) comprises at least one tap bore (49) which issues through an upper boundary surface (cf. 25) of the piston (20) (Fig. 2).

8. Apparatus according to claim 6 or 7, characterised in that the piston (20) is supported against the wall (28) of the bottom cavity (19) by two axially spaced guide devices (38, 39), and in that at least the lower guide device (39) is sealed circumferentially relative to the wall (28).

**Revendications**

1. Procédé de formation d'une paraison (51) par pressage dans un moule ébaucheur (1) d'une machine pour le moulage du verre, comprenant les phases suivantes:

a) à partir d'un distributeur, on introduit une goutte de verre fondu de haut en bas dans une cavité de moule-bloc (17) appartenant à un moule-bloc (2) non divisé longitudinalement, cavité qui décroit en surface de section vers le bas, en s'éloignant de la bague (56) de la paraison (51),

b) on ferme un moule de bague (4), présentant un outil de bague (11) divisé, et une partie centrale de moule ébaucheur divisée (3), entre le moule-bloc (2) qui contient la goutte et le moule de bague (4), pour former une cavité de moule ébaucheur (16) appartenant au moule ébaucheur (1), et qui comprend, comme partie constitutive, la cavité de moule-bloc (17),

c) on introduit un poinçon ébaucheur (15) dans la cavité de moule ébaucheur (16) et ce poinçon déplace le verre jusqu'à la formation complète de la paraison (51), et

d) on extrait la paraison (51) du moule ébaucheur (1), caractérisé en ce que, avant la phase a), le volume de la cavité de moule-bloc (17) est agrandi d'un volume additionnel (37) qui permet d'introduire dans le moule-bloc (2), au cours de la phase a), une goutte de verre d'un volume qui est plus grand que celui de la cavité de moule-bloc (17), sans qu'il ne se produise de surremplissage du moule-bloc (2), et en ce que le volume de la cavité de moule-bloc (17) est ramené à sa valeur initiale jusqu'à l'achèvement de la formation de la paraison (51), qui se produit dans la phase c), de la masse de verre étant alors refoulée dans le reste de la cavité de moule ébaucheur (16) en franchissant le plan limite extrême supérieur du moule-bloc.

2. Procédé selon la revendication 1, caractérisé en ce que le volume de la cavité de moule-bloc (17) est ramené à sa valeur initiale avant que le poinçon ébaucheur (15) n'entre en contact avec le verre dans la phase c).

3. Procédé selon la revendication 1, caractérisé en ce que, dans la phase c), le poiçon ébaucheur (15) entre déjà en contact avec le verre pendant que le volume de la cavité de moule-bloc (17) est ramené à sa valeur initiale.

4. Procédé selon l'une des revendications 1 à 3, caractérisé en ce qu'un gaz comprimé est introduit dans la cavité de moule-bloc (17), entre un fond (18) du moule-bloc (2) et le verre, et en ce que le gaz comprimé est évacué de la cavité de moule-bloc (17) avant que le volume de la cavité de moule-bloc (17) n'ait été ramené à sa valeur initiale.

5. Dispositif pour la mise en œuvre du procédé selon l'une des revendications 1 à 4, comprenant un moule ébaucheur (1) appartenant à une machine à mouler le verre, qui sert au pressage d'une paraison (51) au moyen d'un poinçon ébaucheur (15), dans lequel le moule ébaucheur (1) présente un moule-bloc (2) non divisé dans la direction longitudinale, comportant lui-même un fond (18) et une cavité de moule-bloc (17), ainsi qu'au-dessus du moule-bloc (2), une partie centrale de moule ébaucheur (3) divisée longitudinalement, et un moule de bague (4) muni d'un outil de bague (11) divisé longitudinalement, et dans lequel la cavité de moule-bloc (17) décroît en surface de section vers le bas et fait partie de la cavité du moule ébaucheur (16), caractérisé en ce qu'un piston (20) qui peut monter et descendre selon une course (22) correspondant à un volume additionnel (37) de la cavité de moule-bloc (17), est agencé dans une cavité de fond (19) cylindrique formée dans le fond (18) du moule-bloc (2), par rapport au moule-bloc (2), et en ce que le piston (20) définit au moins approximativement une surface de fond de la cavité de moule-bloc (17) dans sa position extrême élevée.

6. Dispositif selon la revendication 5, caractérisé en ce que, en haut, le piston (20) forme une fente annulaire (27) avec une paroi opposée (28) de la cavité de fond (19) du moule-bloc (2), et en ce que la fente annulaire (27) est continuellement en communication, par l'intermédiaire d'un réseau de canaux (29) formé dans le piston (20), avec un canal (30) du moule-bloc (2) qui débouche dans la paroi (28) de la cavité de fond (19).

7. Dispositif selon la revendication 6, caractérisé en ce que le réseau de canaux (29) présente au moins un perçage de jonction (49) qui débouche dans une surface limite (cf. 25) supérieure du piston (20) (Fig. 2).

8. Dispositif selon l'une des revendications 6 ou 7, caractérisé en ce que le piston (20) prend appui contre la paroi (28) de la cavité de fond (19) au moyen de deux dispositifs de guidage (38, 39) disposés à un certain écartement axial l'un de l'autre et en ce qu'au moins le dispositif de guidage inférieur (39) est monté à joint étanche dans la direction circonférentielle par rapport à la paroi (28).

FIG.1

FIG. 2

49 25 26

45

46

3
3

38
40
48
29
42

47
40
43
44

39

20

35

FIG. 3

46

48 38

20

29

47

41

45

40

40 41 35

FIG.4